# EUROPÄISCHE PATENTANMELDUNG

(11) **EP 4 428 018 A1**
(43) Veröffentlichungstag der Anmeldung: **11.09.2024**
(21) Anmeldenummer: 24161786.9
(22) Anmeldetag: 06.03.2024
(51) Int. Cl.: B62D 59/04, G05D 1/228, G08G 1/16, H04L 9/40

(54) **AUTONOM FAHRBARER ANHÄNGER**

(30) Priorität: 09.03.2023 DE 102023105924
(71) Anmelder: Fahrzeugwerk Bernard Krone GmbH & Co. KG, 49757 Werlte (DE)
(72) Erfinder: Horstmann, Jan, 48431 Rheine (DE)
(74) Vertreter: Weeg, Thomas

(57) **Zusammenfassung**

Die vorliegende Erfindung bezieht sich auf einen Anhänger (2) mit einem Fahrwerk (4), einer elektrischen Batterie (8), einem elektrischen Antrieb (10) zum Antrieb zumindest eines Rads (18), zumindest einem wahlweise einsetzbaren Stützrad (14), und einer Lenkvorrichtung (16), mit der zumindest eines der Räder (18) und/oder das zumindest eine Stützrad (14) zur Ausführung einer Lenkbewegung des Anhängers (2) ansteuerbar beweglich ist.

Um einen solchen Anhänger (2) auch ohne eine Zugmaschine bewegen zu können, wird vorgeschlagen, eine Steuerungsvorrichtung (20) zu verwenden, die über eine Schnittstelle (26) zu einem Kommunikationssystem (32) Kommunikationsdaten (40) aus dem Kommunikationssystem (32) und über eine weitere Schnittstelle (28) zu einem sensorgestützten Umfeldüberwachungssystem (34) Sensordaten (42) aus einer sensorgestützten Umfeldüberwachung empfängt und Stellsignale (38) an den elektrischen Antrieb (10) und/oder die Lenkvorrichtung (16) in Abhängigkeit von Daten aus dem Kommunikationssystem (32) und dem Umfeldüberwachungssystem (34) generiert.

## Beschreibung

Die vorliegende Erfindung bezieht sich auf einen Anhänger nach dem Oberbegriff des Anspruchs 1 sowie auf ein Verfahren zum Bewegen eines Anhängers nach den Merkmalen des Anspruchs 22.

Ein gattungsgemäßer Anhänger ist aus der Schrift WO 2013/076607 A1 bekannt. Um Waren zu transportieren, wird der Anhänger an eine Zugmaschine angehängt und mit dieser bewegt. Zeitweise wird ein Anhänger aber auch auf Parkplätzen oder Betriebshöfen nur geparkt, gewartet, beladen oder entladen, ohne dass während dieser Vorgänge eine Zugmaschine nötig und mit dem Anhänger verbunden ist. Um den von einer Zugmaschine abgekoppelten Anhänger gleichwohl auf möglichst einfache Weise über kurze Strecken, insbesondere innerhalb eines Betriebshofes, bewegen zu können, beispielsweise zwischen einer Parkposition, einer Ladebucht, einem Wartungspunkt und/oder einem Bereitstellungspunkt, wird in der Schrift WO 2013/076607 A1 vorgeschlagen, den Anhänger mit einem batterieelektrischen Antrieb und einer Lenkvorrichtung auszustatten. Über den batterieelektrischen Antrieb und die Lenkvorrichtung ist der Anhänger unabhängig von einer Zugmaschine angetrieben beweglich. In der Schrift WO 2013/076607 A1 ist aber nicht näher offenbart, wie der Anhänger dabei gesteuert werden kann. Bei diesem System kontrolliert und steuert ein Fahrer dauerhaft die Längs- und Querführung des Anhängers. Die Fahrbewegungen des Anhängers müssen von einer Person mit manuellen Bedieneingaben an Bedienelementen, die sich direkt am Anhänger befinden, gesteuert werden. Ein Teil-oder vollautomatisierter Rangierbetrieb des Anhängers ist nicht möglich.

Aus dem Caravanbereich sind vergleichbare assistierte Rangiersysteme bekannt, bei denen Caravan-Anhänger mit batterieelektrischen Antrieben der Räder und einer entsprechenden Lenkvorrichtung an der Deichsel unabhängig von einem Zugfahrzeug von einer Person auf einen Stellplatz eingeparkt werden können. Diese Systeme sind ebenfalls nicht ferngelenkt ohne einen direkten Kontakt einer Bedienperson zum Antrieb und zur Lenkung und auch nicht automatisiert, sondern erfordern die ständige Begleitung und Kontrolle durch eine natürliche Person vor Ort. Ein teil-oder vollautomatisierter Betrieb ist nicht möglich.

Es ist die Aufgabe der vorliegenden Erfindung, den Anhänger so auszustatten, dass er ferngelenkt und/oder autonom in einem automatisierten Betrieb beweglich ist.

Die Aufgabe wird für einen gattungsgemäßen Anhänger mit den kennzeichnenden Merkmalen des Anspruchs 1 und für ein Verfahren zum Bewegen eines Anhängers mit den Merkmalen des Anspruchs 20 gelöst.

Durch die elektronische Steuerungsvorrichtung und das Softwareprogramm, das einen Bestandteil der Steuerungsvorrichtung bildet, ist es möglich, den Anhänger ferngesteuert oder autonom in einem automatisierten Betrieb zu bewegen. Da der Anhänger eine Brennstoffzelle, Batterie bzw. einen wieder aufladbaren Akkumulator, und/oder ein stromzeugendes Aggregat sowie zumindest einen Elektromotor zum Antrieb zumindest eines von einer Tragachse getragenen Rades aufweist, ist in dem Anhänger hardwareseitig die technische Voraussetzung für ein angetriebenes Fahren des Anhängers gegeben.

Wenn nachfolgend von einem elektrischen Antrieb die Rede ist, kann es sich dabei um einen Antrieb handeln, der seine Energie aus einer wieder aufladbaren Batterie oder Akkumulator bezieht, wobei die Aufladung der Batterie auf bekannte Weise erfolgen kann, beispielsweise durch eine Brennstoffzelle oder ein anderes stromzeugendes Aggregat. Die elektrische Energie kann aber auch direkt von einem stromzeugenden Aggregat erzeugt und ohne den Umweg über eine Batterie dem Antrieb zugeleitet werden, beispielsweise von einer Brennstoffzelle.

Durch zumindest ein Stützrad ist der Anhänger auch insbesondere auf seiner der Tragachse abgewandten Seite auf dem Boden abgestützt. Das ist insbesondere bei Sattelaufliegern wichtig, bei denen der Anhänger im normalen Gebrauch mit seinem vorderen Ende über einen Königszapfen auf der Sattelkupplung einer Zugmaschine und mit seinem hinteren Ende auf einer oder mehreren Tragachsen abgestützt ist. Ohne zumindest ein Stützrad im vorderen Bereich des Anhängers wäre es schwierig, einen solchen Anhänger ausbalanciert auf dem Boden abgestützt ferngesteuert oder autonom in einem automatisierten Betrieb zu bewegen. Zumindest bei Sattelaufliegern ist also üblicherweise zumindest ein Stützfuß vorhanden, der auch bereits mit zumindest einem Stützrad versehen sein kann. Das für sich bekannte Stützrad an dem ebenfalls für sich bekannten Stützfuß kann also mit einer Lenkvorrichtung verbunden sein, mit der das Stützrad aktiv oder passiv lenkbar ist. Es ist aber auch möglich, zusätzlich zu dem bekannten Stützfuß zumindest einen gesonderten Stützfuß an dem Sattelauflieger vorzusehen, an dem dann zumindest ein Stützrad befestigt ist und das mit der Lenkvorrichtung verbunden und aktiv oder passiv lenkbar ist. Das Stützrad kann mit dem Anhänger schwenkbeweglich und/oder in einer linearen Richtung beweglich verbunden sein, um es zwischen einer Gebrauchsstellung und einer Nichtgebrauchsregelung hin und her bewegen zu können. Es können auch zwei Stützräder vorhanden sein, die jeweils an einem Stützfuß oder gemeinsam an einem Stützfuß befestigt sind, der jeweils im vorderen Teil eines Anhängers klappbar am Rahmen befestigt ist. Ein höhenverstellbarer Stützfuß kann mit einem Motor ein- und ausfahrbar sein, aber auch das Klappen eines Stützfußes kann motorisch angetrieben erfolgen.

Lenkvorrichtungen für Anhänger mit einer drehbar gelagerten Achse mit einem oder mehreren daran befestigten Rädern sind als solche ebenfalls bekannt. Die Lenkung des Anhängers ist möglich, indem die Drehbewegung einer drehbar gelagerten Achse über einen Stellmotor aktiv gesteuert und geregelt wird. Über eine gezielte Ansteuerung des Stellmotors können gewünschte Lenkwinkel der drehbar gelagerten Achse eingestellt werden.

Durch die Verbindung des elektrischen Antriebs und der Lenkvorrichtung mit der elektronischen Steuerungsvorrichtung kann die Funktion dieser Komponenten elektronisch gesteuert und geregelt werden. Die elektronische Steuerungsvorrichtung kann den Antrieb einer Tragachse über entsprechende Stellbefehle ein- und ausschalten, sie kann die Drehrichtung des Antriebs für die Räder einer Tragachse vorgeben - gegebenenfalls auch in entgegengesetzte Drehrichtungen der Räder, um einen Lenkimpuls zu erzeugen -, und sie kann die Leistung und Drehzahl vorgeben, mit denen der Antrieb der Räder einer Tragachse arbeitet. Genauso kann die elektronische Steuerungsvorrichtung bei einem aktiv gelenkten Stützrad den Stellmotor der Lenkvorrichtung über einen entsprechenden Stellbefehl aktivieren oder deaktivieren und diesen in eine von zwei Drehrichtungen laufen lassen, sodass sich das Stützrad in eine gewünschte Richtung dreht und sich die Lenkvorrichtung auf einen gewünschten Lenkwinkel einstellt. Bei angetriebenen Stützrädern können diese als Lenkvorrichtung ebenfalls mit einer Drehzahldifferenz und/oder einer entgegengesetzten Drehrichtung betrieben werden, um damit einen Lenkimpuls zu erzeugen.

Wenn die Lenkbewegungen durch Drehzahldifferenzen der Räder einer Tragachse erzeugt werden und der Antrieb der Räder einer Tragachse dadurch gleichzeitig die Lenkvorrichtung ausbildet, ist es auch möglich, ein oder mehrere Stützräder nur passiv gelenkt der Fahrrichtung des Anhängers folgen zu lassen, die Stützräder können dann bevorzugt frei drehen. Die Drehzahldifferenzen zwischen den Rädern einer Tragachse oder den Stützrädern können auf unterschiedliche Weise herbeigeführt werden. So kann die Antriebsleistung einer Eingangswelle in ein Differentialgetriebe geleitet werden. Unterschiedliche Drehgeschwindigkeiten der Abtriebswellen vom Differentialgetriebe an die Räder und daraus folgende Drehzahlunterschiede der Räder können durch Bremsmomente und/oder Beschleunigungsmomente erzeugt werden, die im Differentialgetriebe oder außerhalb davon erzeugt werden und auf die Kegelräder im Differenzialgetriebe einwirken. Es kann auch jedes Rad einer Tragachse einzeln über einen eigenen Motor angetrieben sein, die Drehzahldifferenz zwischen den Rädern wird dann durch unterschiedliche Antriebsdrehzahlen oder auch -richtungen der Motoren erzeugt.

Diese technischen Möglichkeiten einer mit einem elektrischen Antrieb und einer Lenkvorrichtung verbundenen elektronischen Steuerungsvorrichtung werden aber erst in einem ferngesteuerten oder autonomen, automatisierten Betrieb sinnvoll nutzbar, wenn die elektronische Steuerungsvorrichtung mit einem Softwareprogramm ausgestattet ist, das nicht nur darauf programmiert ist, über zumindest eine geeignete erste Schnittstelle die Stellsignale an den elektrischen Antrieb und die Lenkvorrichtung zu übermitteln, sondern darüber hinaus auch darauf programmiert ist,
- über eine zweite Schnittstelle zu einem Kommunikationssystem Kommunikationsdaten aus dem Kommunikationssystem zu empfangen, und
- über eine dritte Schnittstelle zu einem sensorgestützten Umfeldüberwachungssystem Sensordaten aus einer sensorgestützten Umfeldüberwachung zu empfangen.

Die zweite Schnittstelle zu einem Kommunikationssystem ermöglicht es der elektronischen Steuervorrichtung, Kommunikationsdaten mit externen Rechnern auszutauschen. Bei dem Kommunikationssystem handelt es sich insbesondere um ein elektronisches Kommunikationssystem, über das elektronische Daten als Kommunikationsdaten ausgetauscht werden. Das Kommunikationssystem wickelt die Kommunikation, insbesondere den Datenverkehr, bevorzugt über eine kabellose Verbindung zu einem externen Rechner ab. Bei dem Kommunikationssystem kann es sich um ein Funknetz wie beispielsweise ein Bluetooth-, W-LAN- oder Mobilfunknetz handeln, und/oder es werden Daten über optische und/oder magnetische Signalgeber und -empfänger ausgetauscht, wie beispielsweise Laser-, IR-, RFID- Sender und - empfänger, Barcodes und Barcodeleser, und/oder im Boden verlegte Induktionsschleifen. Bei den externen Rechnern kann es sich um beliebige Geräte handeln, beispielsweise ein Mobile Device wie einem Mobiltelefon, einem mobilen Bedienteil oder einem Tablet-Computer, das zur Identifikation, Freischaltung, zum Datenaustausch sowie zur Fernsteuerung der Bewegungen des Anhängers eingesetzt wird. Ein externer Rechner kann auch in einem Zugfahrzeug oder in einem anderen Anhänger angeordnet sein, die Kommunikation und der Datenaustausch erfolgt dann von Fahrzeug zu Fahrzeug. Es kann sich auch um stationäre Rechner handeln, die als stand-alone-Rechner oder in einem Netzwerk organisiert sind. Solche stationären Rechner können beispielsweise in der Logistikzentrale des Betreibers des Anhängers, einer Kontrollstation eines Betriebshofes, eines Lagerhauses, an dem der Anhänger be- oder entladen werden soll, eines Stützpunktes zur Durchführung von Wartungs- und Servicearbeiten an dem Anhänger oder eines Parkplatzes, auf dem der Anhänger sich befindet, oder an dem Standort einer möglichen Fernsteuerung durch einen Fahrer aufgestellt sein. Über die zweite Schnittstelle zu einem Kommunikationssystem ist ein Zugriff von außen auf die Steuerungsvorrichtung möglich. Über die zweite Schnittstelle zu einem Kommunikationssystem können als Kommunikationsdaten insbesondere Fahrbefehle an den Anhänger, aber auch sonstige Daten ausgetauscht werden. Damit ein externer Rechner mit der elektronischen Steuerungsvorrichtung kommunizieren kann, verfügt dieser vorteilhaft ebenfalls über ein geeignetes Softwareprogramm. Bei dem Softwareprogramm kann es sich beispielsweise um eine Bedien-App oder ein Steuerungsprogramm handeln, das geeignete Anzeigen und Eingabemöglichkeiten aufweist um mit der elektronischen Steuerungsvorrichtung kommunizieren zu können.

Der Austausch sowohl der Daten vom als auch zum Kommunikationssystem muss über eine gesicherte Verbindung, welche die Identität des Anhängers als auch des Empfängers bzw. des Bedieners prüft, protokolliert und freigegeben werden. Hierbei ist es Aufgabe der gesicherten Verbindung, jegliche unbefugten Datenzugriffe sowohl auf die Betriebsdaten als auch auf die Steuerungsdaten zu unterbinden. Diese gesicherte Verbindung sollte zudem sicherstellen, dass alle kommunizierten Daten auf Plausibilität und Rechtsmäßigkeit geprüft werden, bevor diese zur Steuerung des Fahrzeugs genutzt werden bzw. Eingang in die Zieldatenbank des Betreibers finden.

Die dritte Schnittstelle zu einem sensorgestützten Umfeldüberwachungssystem ermöglicht es der Steuerungsvorrichtung, Sensordaten aus einer sensorgestützten Umfeldüberwachung zu empfangen. Durch die Daten aus der sensorgestützten Umfeldüberwachung wird die Steuerungsvorrichtung in die Lage versetzt, zu überprüfen, ob an die Steuerungsvorrichtung übermittelte Befehle ausführbar sind, oder Ausführungsroutinen in Abhängigkeit von Sensordaten aus der sensorgestützten Umfeldüberwachung je nach Programmierung abzuwandeln oder ganz zu stoppen.

Erst die Umfeldüberwachung ermöglicht einen sicheren automatisierten autonomen Fahrbetrieb des Anhängers in einem automatisierten Betriebsmodus.

Das sensorgestützte Umfeldüberwachungssystem kann einen oder mehrere Sensortypen verwenden, wie beispielsweise optische Sensoren, insbesondere digitale Kamerasysteme, aber auch Lidar-Sensoren, Radarsensoren, Ultraschallsensoren, Raddrehzahlsensoren, Induktionssensoren und/oder Inertialsensoren. Ein digitales Kamerasystem kann mit einer automatisierten Bildauswertung gekoppelt sein, über die Personen, stehende oder geparkte andere Fahrzeuge, Fahrwege oder sonstige Hindernisse erkannt werden können. Die Sensordaten können insbesondere sicherheitsrelevante Informationen erheben. So können über die Sensordaten drohende Kollisionen mit Personen oder Hindernissen erkannt und vermieden werden, indem die Steuerungsvorrichtung auf Basis der Daten aus der Umfeldüberwachung den Anhänger stoppt oder eine andere abgewandelte Fahrtroute auswählt, bei der eine Kollision vermieden wird. Auch Umplanungen von vorgegebenen oder von der elektronischen Steuerungsvorrichtung selbst errechneten Routen sind aufgrund des dynamischen Umfeldgeschehens auf Basis der Daten aus der Umweltüberwachung möglich. Induktionssensoren bieten zudem die Möglichkeit den autonom zu befahrenden Betriebshof mittels Induktionsschleifen zu begrenzen, um sicherzustellen, dass bei einem Ausfall oder in einem Fehlerfall der GPS-Verbindung jeglicher Automatismus an der Grenze des Betriebshofes endet und das Fahrzeug den öffentlichen Raum nicht gefährdet.

Die Sensordaten aus dem sensorgestützten Umfeldüberwachungssystem können auch zur Feinsteuerung des elektrischen Antriebs und der Lenkvorrichtung genutzt werden, beispielsweise bei der Annäherung des Anhängers an eine Ladebucht oder Laderampe, eine Ladestation zum Aufladen der Batterie, eine Parkposition oder bei der Einfahrt in eine Wasch- oder Enteisungsanlage oder eine Werkstatt.

Das Softwareprogramm ist darauf programmiert, die an den elektrischen Antrieb und/oder die Lenkvorrichtung zu übermittelnden Stellsignale in Abhängigkeit von Kommunikationsdaten aus dem Kommunikationssystem und Sensordaten aus dem Umfeldüberwachungssystem zu generieren. Das Softwareprogramm wertet dazu die vom Kommunikationssystem und vom Umfeldüberwachungssystem übermittelten Daten aus. Durch die kombinierte Auswertung der Daten aus dem Kommunikationssystem und aus dem Umfeldüberwachungssystem wird vermieden, dass der Anhänger Bewegungen macht, durch die Personen oder Sachen, insbesondere auch der Anhänger selbst oder die von ihm beförderte Ladung, geschädigt werden könnten. So ist es zwar möglich, über das Kommunikationssystem einen Fahrbefehl zu übermitteln und dessen sofortige Ausführung anzuordnen. Wenn die Daten aus dem Umfeldüberwachungssystem allerdings ein Hindernis erkannt haben und die entsprechenden Sensordaten an das Softwareprogramm übermittelt worden sind, hat das Softwareprogramm je nach Programmierung und Datenlage die Möglichkeit, den Fahrbefehl zu ignorieren oder die Ausführung des Fahrbefehls auf einen späteren Zeitpunkt zu verschieben.

Wenn in der Beschreibung und den Ansprüchen von einer ersten, zweiten, dritten und vierten Schnittstelle die Rede ist, so werden die Zahlwörter nur zur Unterscheidung der verschiedenen Schnittstellen verwendet. Die Aufzählung bedeutet nicht, dass eine entsprechende Anzahl physischer Schnittstellen ausgebildet sein muss. Physisch kann es sich um eine einzige Schnittstelle handeln, wie beispielsweise ein Netzknoten zu einem elektronischen Busnetz, an das weitere Netzknoten angebunden sind, wie beispielsweise ein Funkmodem, die Sensoren des Umfeldüberwachungssystems, der elektromotorische Antrieb oder die Lenkvorrichtung. Funktional unterscheiden sich die Schnittstellen insbesondere durch ihre Programmierung und die Art der Daten, die über die jeweilige Schnittstelle ausgetauscht werden. Beim Datenaustausch können die unterschiedlichen Schnittstellen beispielsweise durch eine entsprechende Adressierung der Daten in zugehörigen Datenpaketen unterscheidbar sein.

Nach einer Ausgestaltung der Erfindung ist das Softwareprogramm der elektronischen Steuervorrichtung darauf programmiert, Kommunikationsdaten aus dem Kommunikationssystem und Sensordaten aus dem Umfeldüberwachungssystem zu empfangen, die eine Prioritätskennung aufweisen, und/oder den Kommunikationsdaten aus dem Kommunikationssystem und den Sensordaten aus dem Umfeldüberwachungssystem programmgestützt eine eigene Priorität zuzuordnen, die Prioritäten der Kommunikationsdaten und der Sensordaten eines aktuell von der Steuerungsvorrichtung ausgeführten Fahrbefehls wiederholt in ihrem Prioritätsrang miteinander zu vergleichen, und einen aktuell von der Steuerungsvorrichtung ausgeführten Fahrbefehl abzubrechen oder abzuwandeln, wenn neu eingegangene oder neu priorisierte Kommunikationsdaten und/oder Sensordaten einen höheren Prioritätsrang aufweisen als der Prioritätsrang des aktuell von der Steuerungsvorrichtung ausgeführten Fahrbefehls. Der aktuell von der Steuerungsvorrichtung ausgeführten Fahrbefehl hat dabei bevorzugt ebenfalls einen Prioritätsrang, der dadurch mit den Prioritätsrängen der neu eingehenden Kommunikationsdaten und Sensordaten vergleichbar ist.

Das Softwareprogramm wird durch die Priorisierung von Daten insbesondere in die Lage versetzt, einen aktuell von der Steuerungsvorrichtung ausgeführten Fahrbefehl insbesondere dann abzubrechen oder abzuwandeln - was auch eine Beendigung des zuvor ausgeführten Fahrbefehls darstellt -, wenn das Softwareprogramm durch seine Programmierung aus den Kommunikationsdaten und/oder Sensordaten erkennt, dass bei einer unveränderten Abarbeitung des Fahrbefehls ein Kollisionsrisiko mit einer Person oder einer Sache besteht. Ein Kollisionsrisiko kann in bestimmten Fällen auch erst durch eine Verknüpfung der Kommunikations- und/oder Sensordaten mit weiteren Anhängerspezifischen Daten und/oder Daten aus dem Fahrbetrieb erkennbar werden, die das Softwareprogramm programmgestützt ausführen kann, oder das Kollisionsrisiko ist dadurch zumindest schneller erkennbar. So muss beispielsweise die aktuelle Fahrtrichtung und Fahrtgeschwindigkeit bekannt sein, um berechnen zu können, ob und wann bei einer unveränderten Ausführung des Fahrbefehls eine Kollision eintritt. Das gilt beispielsweise auch für die mit dem Anhänger möglichen Bremswege oder Beschleunigungen, deren Länge auch davon abhängen kann, ob sich der Anhänger aktuellen einer Kurvenfahrt oder in einer Geradeausfahrt befindet, oder für mögliche Lenkwinkel für Ausweichlenkbewegungen. Um eine eigene Priorisierung vornehmen oder Konflikte zwischen gleichen Prioritäten auflösen zu können, verfügt das Softwareprogramm bevorzugt über einen Katalog, in dem bestimmte Prioritätswerte für bestimmte Daten oder Datenkombinationen hinterlegt ist. Die Priorisierung von Daten kann auch Navigationsdaten mit einbeziehen.

Durch den wiederholten Vergleich der Prioritätsränge können zwischenzeitlich eingegangene höher priorisierte Daten, Befehle oder Aktionen als solche erkannt und die Rangliste der Priorisierung entsprechend angepasst werden. Der Vergleich kann mit einer hohen Wiederholfrequenz, insbesondere durchgängig, vorgenommen werden, so dass auf Prioritätskonflikte immer schnell reagiert werden kann.

Der Begriff der Sensordaten aus der Umfeldüberwachung kann auch Zustands- oder Betriebsdaten des Anhängers sowie seiner Komponenten mit einbeziehen. Wenn die elektronischen Überwachungssysteme des Anhängers beispielsweise eine Störung der Bremsanlage, eines Antriebsmotors, einen für eine Fahrt zu niedrigen Luftdruck in einem Reifen, Ausfälle in der Beleuchtung und/oder einen zu niedrigen SOC-Wert der Batterie melden, können derartige Meldungen eine so hohe Priorität aufweisen oder den Meldungen vom Softwareprogramm eine so hohe Priorität zugeordnet werden, dass dadurch der Abbruch oder die Abänderung eines aktuell ausgeführten Fahrbefehls indiziert ist.

Von der Priorisierung können aber nicht nur sicherheitsrelevante Daten erfasst werden, sondern auch in der Dringlichkeit höher bewertete Auftragsdaten. So können die Kommunikationsdaten dem Softwareprogramm den Befehl geben, anstelle einer aktuell angefahrenen Ladebucht A eine andere Ladebucht D anzufahren, weil die Ladebucht A aktuell blockiert ist, oder die Anfahrt zur Ladebucht A unmittelbar zu unterbrechen und zunächst zu einer Tankstelle oder einem Waschplatz zu fahren, um nach dem Tanken oder Waschen die Anfahrt zur Ladebucht A fortzusetzen.

Indem die Prioritäten der Kommunikationsdaten, der Sensordaten und eines aktuell von der Steuerungsvorrichtung ausgeführten Fahrbefehls in einer Endlosschleife in ihrem Prioritätsrang miteinander verglichen werden, ist es möglich, nahezu in Echtzeit auf veränderte Prioritäten zu reagieren. Gerade bei sicherheitsrelevanten Anwendungen ist es wichtig, Reaktionszeiten in Gefahrensituationen möglichst kurz zu halten.

Nach einer Ausgestaltung der Erfindung ist das Softwareprogramm darauf programmiert, über eine vierte geeignete Schnittstelle Navigationsdaten zu einem Navigationssystem zu empfangen, und das Softwareprogramm ist darauf programmiert, die an den elektrischen Antrieb und/oder die Lenkvorrichtung zu übermittelnden Stellsignale in Abhängigkeit von Navigationsdaten zum Navigationssystem zu generieren. Durch die zusätzliche Schnittstelle des Softwareprogramms zu einem Navigationssystem kann dieses die Navigationsdaten zusätzlich auswerten und bei der Generierung der Stellsignale an den elektrischen Antrieb und/oder die Lenkvorrichtung berücksichtigen.

Nach einer Ausgestaltung der Erfindung ist das Softwareprogramm darauf programmiert, als Navigationsdaten Wegpunkte, Zielpunkte und/oder die Daten zu einer Route einer vom Anhänger zurückzulegenden Strecke zu empfangen und zu Stellsignalen an den elektrischen Antrieb und die Lenkvorrichtung zu verarbeiten. Über die Schnittstelle können komplette Karten, Routen oder auch nur Positionsdaten eines einzelnen Ortes übertragen werden. Auch Korrektursignale für Navigations- oder Positionsdaten, die beispielsweise von einem regionalen oder lokalen Sender gesendet werden, können als Navigationsdaten über die Schnittstelle übermittelt werden. Wenn das Softwareprogramm bereits eine passende Karte zu dem Gelände, in dem sich der Anhänger bewegen soll, in Dateiform vorhält, kann es ausreichen, nur die Koordinaten des Ziels an das Softwareprogramm zu übermitteln, zu dem sich der Anhänger hinbewegen soll. Das Softwareprogramm rechnet dann auf Basis der verfügbaren Kartendaten selbsttätig eine Route aus, die danach vom Anhänger abgefahren wird. Es ist aber auch möglich, über die Schnittstelle mehr Navigationsdaten zu übertragen, wie beispielsweise die Daten einer fertig berechneten Route, oder es wird über die Schnittstelle eine Karte der aktuellen Umgebung übertragen, in der befahrbare Flächen, Parkzonen, einzelne Parkplätze, Wartungspunkte und/oder Beladezonen einprogrammiert sind, zwischen denen sich der Anhänger dann je nach erteiltem Fahrbefehl zu bewegen hat. Eine solche Übermittlung kompletter Karten ist insbesondere dann sinnvoll, wenn sich der Anhänger auf privat genutzten Flächen bewegen soll, für die handelsübliche Navigationssysteme keinen Datensatz vorhalten und das Softwareprogramm mangels genauerer Daten keine Routenplanung ausführen kann. Bei den privat genutzten Flächen kann es sich beispielsweise um Parkplätze von Flottenbetreibern oder anderen Logistikunternehmen, Betriebshöfe, Rastplätze, Wartungsbetriebe oder Lagerhäuser handeln. Hier kann der Betreiber der privat genutzten Fläche digitale Kartendaten dieser Fläche vorhalten, die dem Anhänger bei der Übersendung eines Fahrbefehls zusammen mit einer fertig vorgeplanten Routenplanung übersandt werden. Bei dem Navigationssystem kann es sich um ein Satelliten-Navigationssystem handeln, andere Navigationssysteme sind aber auch möglich. Die Navigationssysteme können auch auf Basis der gesendeten Daten von lokalen und/oder regionalen Sendeanlagen arbeiten, oder es wird ein gemischtes Navigationssystem genutzt, bei dem die Daten eines satellitengestützten Navigationssystems mit den Daten eines lokalen oder regionalen Korrektursensors verknüpft werden, um Fehler bei der Navigation möglichst gering zu halten.

Nach einer Ausgestaltung der Erfindung ist das Softwareprogramm darauf programmiert, als Kommunikationsdaten Daten zu An- und Abmelderoutinen eines Managementsystems, Auftragsdaten, Ein- und Ausschaltbefehle für den elektrischen Antrieb und/oder die Lenkvorrichtung und/oder Anhängerseitige sonstige Fahrzeugkomponenten, Lade- oder Entladebefehle für die elektrische Batterie, Fahrbefehle, Parkbefehle und/oder Daten zur vorhandenen oder neu zu beladender Ladung zu empfangen.

Bei einem Managementsystem kann es sich um eine Software handeln, in der bestimmte Betriebsabläufe geplant, die geplanten Betriebsabläufe mit den tatsächlichen Abläufen verglichen und bei Abweichungen Fehlermeldungen oder an die Abweichung angepasste Pläne generiert werden. Bei dem Managementsystem kann es sich beispielsweise um eine Speditionssoftware handeln, mit der das Auftragsmanagement von Transporten vom Angebot bis zur Abrechnung bearbeitet wird. Die von einem Logistikunternehmen durchgeführten Transporte können damit geplant, disponiert und in Echtzeit begleitet werden. In das Managementsystem kann auch die Kommunikation mit den Beteiligten wie beispielsweise Kunden, Fahrern und sonstigen Dienstleistern integriert sein. Das Managementsystem kann auch eine Software sein, mit der ein Flottenbetreiber dokumentiert und kontrolliert, wo sich die von ihm betriebenen Fahrzeuge befinden. Bei dem Managementsystem kann es sich aber auch um eine Software handeln, mit der der Verkehr an einem Knotenpunkt für Warenumschlag geplant, kontrolliert und gesteuert wird. Bei dem Knotenpunkt für Warenumschlag kann es sich beispielsweise um eine Hafenanlage, ein Lagerhaus, einen Parkplatz und/oder um eine Servicestation und dergleichen handeln.

Die Betreiber eines Knotenpunktes für Warenumschlag haben nur ein zeitlich begrenztes Interesse daran, den Anhänger autonom und automatisiert bewegen zu können. Das Interesse an einem Zugriff auf den Anhänger besteht üblicherweise nur solange, wie sich der Anhänger physisch auf dem Gelände des Knotenpunktes befindet. Für Disponenten, die mit einem solchen Managementsystem arbeiten und bestimmte Transportfahrzeuge zu einem bestimmten Zeitpunkt an einem bestimmten Ort haben müssen, ist es vorteilhaft, wenn sie über eine entsprechende Schnittstelle im Managementsystem Kommunikationsdaten an die elektronische Steuerungsvorrichtung im Anhänger übermitteln können, damit dieser autonom in einem automatisierten Betrieb den Anforderungen aus dem Managementsystem entsprechend zu einer gewünschten Zeit von einem Ist-Standort zu einem anderen Soll-Standort fährt. Sobald der Anhänger einen Knotenpunkt für Warenumschlag wieder verlassen hat, ist es allerdings nicht mehr notwendig, dass der Betreiber des Knotenpunktes Fahrbefehle an den Anhänger übermitteln kann, und aus Sicht eines Speditionsunternehmens oder eines Flottenbetreibers ist das auch nicht mehr wünschenswert. Über die Kommunikationsdaten können nunmehr Daten zu An- und Abmelderoutinen eines Managementsystems mit der elektronischen Steuerungsvorrichtung und/oder des Softwareprogramms der elektronischen Steuerungsvorrichtung mit einem Managementsystem ausgetauscht werden.

Bei den Auftragsdaten kann es sich um Daten handeln, die im Zusammenhang stehen mit der aktuellen Nutzung des Anhängers. So können als Kommunikationsdaten Informationen zur beförderten Ladung, Sicherheitsinformationen, Herkunftsnachweise, Zollpapiere, Ausliefertermine, Gewichte, Volumina, Art und Weise der Verpackung, Ladungssicherung, Höchst-oder Mindesttemperaturen der Ladung und dergleichen an die elektronische Steuerungsvorrichtung des Anhängers übermittelt werden.

Als Kommunikationsdaten können auch Ein- und Ausschaltbefehle für den elektrischen Antrieb und/oder die Lenkvorrichtung und/oder Anhängerseitige sonstige Fahrzeugkomponenten an die elektronische Steuerungsvorrichtung übermittelt werden. Unter dem Begriff der Ein- und Ausschaltbefehle sind auch solche Befehle zu verstehen, mit denen aktuelle Zustände des elektrischen Antriebs und der Lenkvorrichtung verändert werden. So kann demnach der elektrische Antrieb einen Befehl erhalten, die von ihm abgegebene Leistung zu erhöhen oder abzusenken. Die Lenkvorrichtung kann den Befehl erhalten, den Lenkeinschlag in eine Richtung zu vergrößern oder zu verringern, oder eine Neutralstellung einzunehmen. Über Ein- und Ausschaltbefehle, die an Fahrzeugkomponenten gerichtet sind, können beispielsweise durch entsprechende Stellbefehle an ein Klima- oder Heizaggregat der Laderaum des Anhängers gekühlt oder beheizt werden, Anlagen zur Enteisung von Planenfahrzeugen können ein- und ausgeschaltet werden, die reguläre Fahrzeugbremse kann betätigt oder gelöst werden, Laderaumverriegelungen können geöffnet oder gesperrt werden, ein Stromfluss zum Aufladen der am Anhänger angeordneten elektrischen Batterie kann freigeschaltet oder gesperrt werden, ein automatisierter oder teilautomatisierter Batterietausch kann freigegeben werden, und dergleichen.

Schließlich können als Kommunikationsdaten Parkbefehle und/oder Daten zur vorhandenen oder neu zu beladenden Ladung übermittelt werden. Es ist auch möglich, über die Kommunikationsdaten direkte Fahr- oder Stoppbefehle an die Steuerungsvorrichtung zu übermitteln.

Nach einer Ausgestaltung der Erfindung weist das Softwareprogramm eine Regelschleife auf, in der eine An- und Abmelderoutine zu einem externen Managementsystem programmiert ist. Damit ein Managementsystem wie eines gemäß den vorstehend beschriebenen Beispielen arbeiten kann, ist es erforderlich, dass diesem die jeweiligen aktuellen Einflussgrößen bekannt sind. Bei einem Managementsystem handelt es sich um ein separates Softwareprogramm, für das die Nutzungs- und Zugangsrechte anders geregelt sind als für die elektronische Steuerungsvorrichtung des Anhängers. Wenn durch Kommunikationsdaten von außen auf die elektronische Steuerungsvorrichtung zugegriffen werden soll, insbesondere aus einem Managementsystem heraus, so ist ein solcher Zugriff wesentlich vereinfacht, wenn das Softwareprogramm in einer Regelschleife An- und Abmelderoutinen vorhält, die bevorzugt auch automatisiert ablaufen können. Durch automatisierte An- und Abmelderoutinen ist das Managementsystem darüber informiert, welche Anhänger sich im Wirkungsbereich des Managementsystems befinden. Wenn beispielsweise eine Sattelzugmaschine mit einem von ihr gezogenen Anhänger auf einen Betriebshof fährt, kann sich der Anhänger bei einer Managementsoftware des Betriebshofes selbst anmelden, und/oder die Managementsoftware schickt dem Softwareprogramm des Anhängers eine Nachricht, dass der Anhänger erkannt worden ist. Auch die Abmeldung oder die Bestimmung der Bedingungen für eine Sperrung der Ausführung von empfangenen Kommunikationsdaten können automatisiert erfolgen.

Nach einer Ausgestaltung der Erfindung weist das Softwareprogramm eine Regelschleife auf, in der Berechtigungen für die Erteilung von Befehlen an das Softwareprogramm erteilt werden. So kann zunächst in einer Grundeinstellung prioritär oder ausschließlich der Betreiber des Anhängers und/oder der Fahrer einer Zugmaschine, die den Anhänger zieht, berechtigt sein, Fahrbefehle an die Softwareprogramm des Anhängers zu übermitteln. Über die Regelschleife, das beispielsweise im Rahmen einer Anmelderoutine des Anhängers an einem Standort ablaufen kann, kann der Betreiber des Anhängers und/oder der Fahrer der Zugmaschine aber auch Dritte dazu berechtigen, wie beispielsweise einen Betreiber eines Betriebshofes, auf dessen Gelände sich der Anhänger aktuell befindet. Durch die Vergabe von Berechtigungen an Dritte ist es nicht mehr erforderlich, dass der Betreiber des Anhängers oder ein Fahrer einer Zugmaschine einen Fahrbefehl an den Anhänger ausgibt, das kann dann vielmehr auch vom berechtigten Dritten vor Ort erfolgen, also vom Betreiber eines Betriebshofes, eines Lagerhauses, eines Reparaturbetriebs und dergleichen. Genauso kann in einer Regelschleife des Softwareprogramms über eine Abmelderoutine eine erteilte Berechtigung wieder entzogen werden. Eine erteilte Berechtigung kann beispielsweise entfallen, wenn der Anhänger wieder an eine Zugmaschine angehängt wird, wenn sich die Zugmaschine an einem Ort befindet, der beabstandet, beispielsweise mehr als 2 km von dem Ort entfernt ist, an dem sich der Anhänger befand, als die Berechtigungen erteilt worden ist, wenn sich der Anhänger mit einer definierten Geschwindigkeit, beispielsweise von mehr als 30 km/h bewegt, und/oder aus anderen Gründen, die im Softwareprogramm hinterlegt sind.

Nach einer Ausgestaltung der Erfindung ist das Softwareprogramm darauf programmiert, als Sensordaten des Umfeldüberwachungssystems Daten zur Fahrwegerkennung, Personenerkennung, Hinderniserkennung, Zielerkennung und/oder Temperaturerkennung zu empfangen. Eine Fahrwegerkennung ist sinnvoll, da Anhänger häufig abseits der öffentlichen Straßen geparkt und von ihrer Zugmaschine getrennt werden. Wenn der Anhänger autonom und automatisiert abseits öffentlicher Straßen ohne genauere Daten über den Verlauf und den Zustand eines Fahrwegs bewegt werden soll, kann die Fahrwegerkennung bei der Planung und dem Abfahren einer Route dabei helfen, den Anhänger über eine befahrbare Fläche zu führen, ohne dabei mit baulichen oder natürlichen Hindernissen und/oder anderen Fahrzeugen zu kollidieren. Über einer Fahrwegerkennung kann auch vermieden werden, dass die elektronische Steuerungsvorrichtung den Anhänger auf unbefestigte Flächen fährt, auf denen das Fahrwerk des Anhängers in den Boden einsinkt, oder die zu befahrende Fläche so uneben ist, dass der Anhänger bei der Fahrt zu stark schwankt und umzukippen droht, oder die Ladung beim Befahren einer unbefestigten Fläche beschädigt zu werden droht. Die Personenerkennung kann dabei helfen, eine Kollision mit Personen zu vermeiden. Eine Zielerkennung ist hilfreich, um einen Anhänger genau dorthin bewegen zu können, wo er am Ende eines Fahrweges nach dem Fahrbefehl stehen soll. Über die Zielerkennung können beispielsweise Ladebuchten, Waschplätze, Tankstellen, Ladestationen, oder einzelne Stellplätze erkannt und ausgewählt werden. Nach der Erkennung und Auswahl eines Ziels ist es für die elektronische Steuerungsvorrichtung auch einfacher, die Route und beispielsweise auch erforderliche Rangiervorgänge zu planen, um den Anhänger in genau die Position zu bringen, in der der Anhänger nach dem Abschluss einer Fahrt stehen soll. Über eine Temperaturerkennung können vereiste Fahrbahnoberflächen erkannt und die Fahrbewegungen des Anhängers an die glatten Fahrbahnoberflächen angepasst werden.

Nach einer Ausgestaltung der Erfindung ist die elektronische Steuerungsvorrichtung mit einem Softwareprogramm versehen, das darauf programmiert ist, Daten zu An- und Abmelderoutinen eines Managementsystems, Auftragsdaten, aktuelle und/oder historische Zustandsdaten von Fahrzeugkomponenten des Anhängers, Störungsmeldungen zu Betriebszuständen des Anhängers, Navigationsdaten, Bewegungsdaten, Betriebsdaten des Anhängers, Daten zur Ladung des Anhängers und/oder Sensordaten des Umfeldüberwachungssystems zu generieren und diese automatisiert und/oder auf eine über die dritte Schnittstelle übermittelte elektronische Abfrage über die dritte Schnittstelle zu einem Kommunikationssystem zu übermitteln. Die dritte Schnittstelle ist demnach so ausgelegt, dass sie nicht nur Kommunikationsdaten empfangen, sondern auch senden kann. Sie kann also bidirektional arbeiten und betrieben werden. Die Steuerungsvorrichtung ist dadurch nicht darauf beschränkt, Daten von außen zu empfangen, sondern kann selbst generierte Daten auch nach außen über die Schnittstellen versenden. Der Versand von Daten ist insbesondere für Telematik-Anwendungen relevant und interessant. Für eine vorausschauende Instandhaltung können Zustandsdaten von Komponenten des Anhängers an ein Managementsystem übermittelt werden. So können beispielsweise die Zustände von Bremsbelägen, Füllstände von Tanks und Batterien, Luftdrücke und die Profiltiefen der Reifen, der Sauberkeitsgrad des Laderaums und/oder der Außenflächen des Anhängers übermittelt werden. Bei den Zustandsdaten kann es sich um Zustandsdaten der transportierten Ladung wie deren Temperatur, Feuchtigkeit und/oder Frische handeln.

Nach einer Ausgestaltung der Erfindung ist das Softwareprogramm darauf programmiert, als aktuelle Zustandsdaten Ladezustände der Batterie des Anhängers oder anderer Energiespeicher automatisiert und/oder auf eine über die dritte Schnittstelle übermittelte elektronische Abfrage über die dritte Schnittstelle zu einem Kommunikationssystem zu übermitteln. Ladezustände der Batterie des Anhängers können auch über das Kommunikationssystem an ein externes Managementsystem übermittelt werden. Auch für in Tanks vorgehaltene Brennstoffe, wie beispielsweise Wasserstoff für eine Brennstoffzelle oder fossile Energieträger für Verbrennungsmotoren, können die Füllstände als ein Ladezustand von anderen Energiespeichern automatisiert oder auf Anfrage übermittelt werden. Die Daten über einen aktuellen Ladezustand der Batterie können vom Softwareprogramm der elektronischen Steuerungsvorrichtung hoch priorisiert werden, insbesondere, wenn die Batterie nur noch eine geringfügige Restladung aufweist. Wenn sich ein Ladepunkt zum Aufladen der Batterie in der Nähe des Anhängers befindet, kann beispielsweise über ein Managementsystem entschieden und der Steuerungsvorrichtung mitgeteilt werden, dass die Batterie aufgeladen oder ausgetauscht werden soll. Der Anhänger kann dann über das Kommunikationssystem einen Fahrbefehl erhalten, im automatisierten Betriebsmodus zu einem Ladepunkt zu fahren. Solche Fahrbefehl kann von der Steuerungsvorrichtung im automatisierten Betriebsmodus abgearbeitet werden.

Nach einer Ausgestaltung der Erfindung ist an dem Anhänger zumindest ein manuell betätigbarer Not-Aus-Schalter angebracht, der mit dem Softwareprogramm der elektronischen Steuerungsvorrichtung verbunden ist und bei dessen Betätigung die elektronische Steuerungsvorrichtung den Anhänger unmittelbar stoppt. Der Not-Aus-Schalter kann ein Bestandteil des Umfeldüberwachungssystems sein. Über den Not-Aus-Schalter haben in der Umgebung des Anhängers befindliche Personen die Möglichkeit, den Anhänger in einem Notfall jederzeit zu stoppen. Der oder die Not-Aus-Schalter sind an einer Stelle des Anhängers angebracht, an der sie für Personen leicht erkennbar und zugänglich sind.

Nach einer Ausgestaltung der Erfindung weist der Anhänger zumindest einen Laderaum-Verschlusssensor auf, der mit dem Softwareprogramm der elektronischen Steuerungsvorrichtung verbunden ist. Der Laderaum-Verschlusssensor kann ein Bestandteil des Umfeldüberwachungssystems sein. Der Laderaum-Verschlusssensor kann darauf ausgelegt sein, den Verschlusszustand zumindest einer Laderaumtür oder einer Plane, die zum Verschließen des Laderaums dient, zu überwachen. Das Softwareprogramm der elektronischen Steuerungsvorrichtung kann so programmiert sein, dass der Anhänger keinen Fahrbefehl ausführt, solange der Laderaum-Verschlusssensor keinen Verschluss des Laderaums meldet.

Nach einer Ausgestaltung der Erfindung weist der Anhänger entlang der Ladebodenkante angeordnete Abstandssensoren auf, die mit dem Softwareprogramm der elektronischen Steuerungsvorrichtung verbunden sind. Die Abstandssensoren können ein Bestandteil des Umfeldüberwachungssystems sein. Die Abstandssensoren können mit dem Softwareprogramm der elektronischen Steuerungsvorrichtung verbunden sein. Das Softwareprogramm kann so programmiert sein, dass es die Antriebskraft und die Lenkbewegungen bei einer Annäherung des Anhängers an eine Zielposition in Abhängigkeit von den Sensordaten der Abstandssensoren steuert. So kann die Fahrgeschwindigkeit bei immer geringer werdenden Abstandswerten zunehmend verringert werden, wenn sich der Anhänger der Ladekante einer Ladebucht nähert. Die Sensorwerte der Abstandssensoren können von dem Softwareprogramm auch bei über die Breite des Anhängers unterschiedlichen Abstandswerten genutzt werden, um den Anhänger durch Lenkbewegungen genau auf die Ladekante auszurichten, sodass der Anhänger in der Parkposition über die Breite der Ladebodenkante mit dieser die Ladekante der Ladebucht kontaktiert und ein sich über die Breite des Laderaums vergrößernder Spalt zwischen der Ladekante der Ladebucht und der Ladebodenkante vermieden wird.

Nach einer Ausgestaltung der Erfindung ist das Softwareprogramm der elektronischen Steuerungsvorrichtung mit einer Schaltvorrichtung verbunden, mit der das Softwareprogramm zwischen einem Zugbetriebsmodus und einem automatisierten und/oder ferngesteuerten Betriebsmodus umstellbar ist. Die Schaltvorrichtung kann als ein physischer Schalter ausgebildet sein, der an dem Anhänger angebracht ist. Die Schaltvorrichtung kann aber auch ein Button in einem Auswahlmenü einer Bediensoftware sein, bei dessen Betätigung das Softwareprogramm entsprechend umgestellt wird. Die durch die Betätigung des Buttons ausgelösten Schaltbefehle können als Kommunikationsdaten über die Kommunikationsschnittstelle an das Softwareprogramm der Steuerungsvorrichtung übermittelt werden. Die Regelstrategien für den elektrischen Antrieb im Zugbetriebsmodus und im automatisierten Betriebsmodus unterscheiden sich grundsätzlich. Während die Antriebsleistung des elektrischen Antriebs im Zugbetriebsmodus insbesondere über einen Kingpin-Sensor gesteuert wird, um zu vermeiden, dass der Antrieb des Anhängers die Zugmaschine vor sich herschiebt und beispielsweise aus einer Kurve drückt, erfolgt die Steuerung des Antriebs im automatisierten und/oder ferngesteuerten Betriebsmodus allein danach, welche Antriebsleistung für das Abfahren der geplanten Route benötigt wird. Um Unklarheiten darüber zu vermeiden, ob sich der elektrische Antrieb aktuell im Zugbetriebsmodus oder im automatisierten und/oder ferngesteuerten Betriebsmodus befindet, kann über die Schaltvorrichtung der jeweils gewünschte Betriebsmodus angewählt werden. Es ist möglich, dass die Schaltvorrichtung auch jedes Mal automatisch betätigt wird, wenn der Anhänger an eine Zugmaschine angekuppelt oder von ihr abgekuppelt wird. Zusätzlich zur Auswahl eines Betriebsmodus kann die Schaltvorrichtung noch darauf ausgelegt sein, gesonderte Betriebszustände anzuwählen, wie beispielsweise einen Wartungsmodus, in dem bestimmte Wartungsarbeiten ausgeführt werden können, ein komplettes Ausschalten des elektrischen Antriebs und der Lenkvorrichtung, oder ein Betriebszustand, in dem eine manuelle Steuerung und Führung des Anhängers von einer Bedienperson möglich ist. Im Wartungsmodus kann beispielsweise vorgesehen sein, die Batterie zu laden, die Batterie zu tauschen, Wasserstoff für die Brennstoffzelle aufzufüllen oder andere Arbeiten am Anhänger auszuführen.

Nach einer Detektion eines erfolgreichen Ankuppelns an eine Zugmaschine kann das Softwareprogramm das Einfahren der Stützfüße initiieren, um eine Kollision der Stützfuße/-räder mit der Fahrbahnoberfläche zu vermeiden und den Anhänger bis zum Erreichen dieser Position einbremsen. Zudem kann das Abkuppeln des Anhängers vom Zugfahrzeug vermieden oder blockiert werden, wenn die Stützfüße noch nicht die Park- oder die Rangierstellung erreicht haben.

Nach einer Ausgestaltung der Erfindung ist das Softwareprogramm der elektronischen Steuerungsvorrichtung mit dem Stellmotor einer Liftachse verbunden und das Softwareprogramm ist darauf programmiert, mit dem Stellmotor die Liftachse in Abhängigkeit von vorprogrammierten Betriebszuständen anzuheben oder abzusenken.

Wenn ein Anhänger mit einer Liftachse ausgestattet ist, kann die elektronische Steuerungsvorrichtung über die Verbindung mit dem Stellmotor die Liftachse auch im automatisierten Betriebsmodus anheben oder absenken, wenn das nach den Betriebsparametern sinnvoll erscheint. Der Stellmotor kann pneumatisch, elektrisch oder hydraulisch angetrieben sein. Für die Verbindung verfügen die elektronische Steuerungsvorrichtung sowie der Stellmotor über eine entsprechende Schnittstelle zur Übermittlung von Stellbefehlen.

Nach einer Ausgestaltung der Erfindung weist die Lenkvorrichtung zumindest ein Stützrad auf, das an einem Stützfuß angeordnet ist, der klappbar oder höhenverstellbar mit dem Rahmen des Anhängers verbunden ist. Insbesondere Sattelauflieger werden üblicherweise mit zumindest einem Stützfuß ausgestattet. der höhenverstellbar oder klappbar mit dem Rahmen des Anhängers verbunden ist und mit dem der Sattelauflieger geparkt werden kann, wenn er von einer Zugmaschine abgekuppelt worden ist. Das zumindest eine Stützrad muss nicht zwingend mit einem Stellantrieb ausgestattet sein, um das Stützrad gezielt und aktiv in eine Lenkrichtung einschlagen und halten zu können. Das Stützrad kann auch passiv mitlaufend gehalten sein, wobei dann die gezielte Lenkung des Anhängers über die jeweiligen Drehzahlen der Räder der Tragachse erfolgt.

Nach einer Ausgestaltung der Erfindung ist der Stützfuß oder die Achsaufnahme des Stützrads mit einem Stellantrieb um eine vertikale Achse drehbar gelagert und der Stellantrieb ist mit dem Softwareprogramm der elektronischen Steuerungsvorrichtung verbunden. Ein herkömmlicher Stützfuß oder die Achsaufnahme des Stützrads kann mit einem vergleichsweise geringen Aufwand mit einem zusätzlichen Stellantrieb versehen sein, um diesen lenkbar zu machen. Es kann aber auch zusätzlich zu einem herkömmlichen Stützfuß ein gesonderter Stützfuß vorhanden sein, der nur dazu dient, zumindest ein Stützrad zu halten, das über den Stellantrieb und die Lenkvorrichtung in eine gewünschte Richtung lenkbar ist. Das Stützrad kann dann entweder über die Lenkvorrichtung aktiv gelenkt werden, wenn der Stellantrieb aktiviert ist, oder das Stützrad folgt bei einem deaktivierten und auf schwimmend geschalteten Stellantrieb passiv einer Fahrtrichtung, die sich aus den Drehgeschwindigkeiten der angetriebenen Räder einer Tragachse ergeben. Wenn der oder die Stützfüße oder die Achsaufnahmen der jeweiligen Stützräder mit einem Stellantrieb um eine vertikale Achse drehbar gelagert sind, können das oder die Stützräder mit dem Stellantrieb auf einen gewünschten Lenkwinkel eingestellt werden. Durch die Verbindung des Stellantriebs mit dem Softwareprogramm der elektronischen Steuerungsvorrichtung können entsprechende von der Steuerungsvorrichtung generierte Stellsignale an den Stellantrieb übermittelt werden. Ein auf diese Weise ausgestatteter Anhänger erhält mit einem vergleichsweise geringen Zusatzaufwand eine Lenkvorrichtung, mit der der Anhänger von der Steuerungsvorrichtung automatisiert lenkbar abgestützt ist. Bei dieser Konstruktion können die Drehachsen der Stützräder so ausgerichtet sein, dass sie das Raumvolumen der Stützfüße oder deren in Längserstreckungsrichtung gedachte Verlängerung schneiden. Bei dieser Anordnung werden Hebelkräfte, die sonst auf die Stützfüße einwirken könnten, vermieden. Das ist insbesondere vorteilhaft bei den hohen Stützlasten, die durch die in einem Anhänger transportierte Ladung auf die Stützfüße und die Stützräder einwirken.

Nach einer Ausgestaltung der Erfindung weist die Lenkvorrichtung zwei Stützräder auf, die jeweils an einem eigenen Stützfuß angeordnet sind, der klappbar oder höhenverstellbar mit dem Rahmen verbunden ist, wobei die Stützfüße oder die Achsaufnahmen der jeweiligen Stützräder mit einem Stellantrieb um eine vertikale Achse drehbar gelagert sind und der Stellantrieb mit dem Softwareprogramm der elektronischen Steuerungsvorrichtung verbunden ist. Die Stützfüße befinden sich bevorzugt auf gegenüberliegenden Seiten des Anhängers und stützen dadurch den Anhänger standfester ab. Indem an jedem Stützfuß ein eigenes Stützrad angebracht ist, ist auch die Abstützung des Anhängers über die Stützräder breiter und damit standsicherer, als wenn nur ein Stützrad vorhanden ist. Bei einer Kurvenfahrt ergibt sich eine bessere Abstützung des Anhängers über das breitere Fahrwerk.

Nach einer Ausgestaltung der Erfindung weist die Lenkvorrichtung zumindest eine um 360° passiv oder aktiv drehbar gelagerte Lenkrolle als Stützrad auf, und die Lenkvorrichtung ist über das Softwareprogramm der elektronischen Steuerungsvorrichtung darauf programmiert, über den elektrischen Antrieb der Räder zumindest einer Tragachse einen Lenkimpuls zu generieren, indem zwischen den auf gegenüberliegenden Seiten einer Tragachse angeordneten Rädern gezielt eine Differenzdrehzahl erzeugt wird. Die Differenzdrehzahl kann erzeugt werden, indem ein erstes Rad einer Tragachse angetrieben und ein zweites auf der gegenüberliegenden Seite des Anhängers angeordneten Rad der Tragachse gebremst wird. Die Räder einer Tragachse können auch mit unterschiedlichen Drehgeschwindigkeiten oder unterschiedlichen Drehrichtungen angetrieben werden, beispielsweise über einen gesonderten Antrieb, der an ein Differenzialgetriebe angeschlossen ist, oder eigene Antriebsstränge zu den jeweiligen Rädern. Aufgrund der Drehzahldifferenz zwischen den Rädern entsteht ein Drehmoment und damit ein Lenkimpuls um die Hochachse des Anhängers. Bei einer passiv drehbar gelagerten Lenkrolle stellt sich die Winkellage der Lenkrolle um ihre Hochachse selbsttätig auf einen Wert ein, der dem über den Antrieb der Räder erzeugten Lenkimpuls folgt und diesem entspricht. Eine aktiv drehbar gelagerte Lenkrolle kann mit einem Stellmotor auf eine gewünschte Winkellage eingestellt werden. Eine aktiv drehbar gelagerte Lenkrolle hat den Vorteil, auch ohne einen Lenkimpuls aus dem Antrieb auf eine gewünschte Winkelstellung eingestellt werden zu können. Wenn die Lenkrolle über keinen eigenen Antrieb verfügt, läuft sie bei Fahrbewegungen des Anhängers passiv mit. Wenn die Lenkrolle über einen eigenen Antrieb verfügt, beispielsweise über einen Elektromotor, ist es möglich, den Anhänger auch allein über die Lenkrolle anzutreiben und zu lenken, oder der Antrieb des Anhängers über die an einer Tragachse angeordneten Räder wird durch den Antrieb der Lenkrolle unterstützt. Soweit die Lenkrolle aktiv drehbar gelagert oder selbst aktiv antreibbar ist, können die Lenkbewegungen und der Fahrantrieb über das Softwareprogramm der Steuerungsvorrichtung im automatisierten Betriebsmodus gesteuert werden. Die Lenkrolle kann vorteilhaft an einem Stützfuß des Anhängers angeordnet sein. Wenn der Anhänger über zwei Stützfüße verfügt, können beide Stützfüße mit einer Lenkrolle versehen sein.

Nach einer Ausgestaltung der Erfindung ist das Softwareprogramm der elektronischen Steuerungsvorrichtung mit einer Verstellvorrichtung verbunden, mit der das Stützrad zwischen einer Betriebsstellung und einer Ruhestellung hin und her verlagerbar ist, die Verstellvorrichtung weist eine Verriegelungsvorrichtung auf, mit der das Stützrad in der Betriebsstellung und/oder in der Ruhestellung verriegelbar ist, die Verriegelungsvorrichtung weist einen mit dem Softwareprogramm verbundenen Sensor auf, mit dem der Verriegelungszustand des Stützrads kontrollierbar ist, und das Softwareprogramm ist darauf programmiert, den automatisierten Betriebsmodus nur dann zu aktivieren, wenn der mit der Verriegelungsvorrichtung verbundene Sensor eine Verriegelung des Stützrads meldet. Durch die Verriegelungskontrolle wird sichergestellt, dass der Anhänger nur dann im automatisierten Betriebsmodus in Bewegung gesetzt wird, wenn das Stützrad in der Betriebsstellung verriegelt ist. Die Verriegelungskontrolle kann auch dazu eingesetzt werden, zu überprüfen, ob das Stützrad auch in der Ruhestellung verriegelt ist, so dass es bei einer Fahrt des Anhängers mit einer Zugmaschine nicht versehentlich Bodenkontakt bekommt.

Nach einer Ausgestaltung der Erfindung ist das Softwareprogramm darauf programmiert, über die Kommunikationsschnittstelle ein Betriebsbereitschaftssignal zu versenden, mit dem auf einem externen Rechner eine Betriebsbereitschaft des Anhängers für einen automatisierten Betriebsmodus angezeigt wird, nachdem das Softwareprogramm einen Funktionscheck von betriebsrelevanten Komponenten des Anhängers ausgeführt hat. Je nach Ergebnis des Funktionschecks kann das Betriebsbereitschaftssignal positiv oder negativ sein. Durch das Betriebsbereitschaftssignal wird ein Nutzer, der den Anhänger im automatisierten Betriebsmodus betreiben möchte, darüber informiert, dass dieser Betriebsmodus wegen eines festgestellten technischen Defekts aktuell nicht verfügbar ist.

Es wird ausdrücklich darauf hingewiesen, dass jeder der Unteransprüche für sich mit dem Gegenstand des Anspruchs 1 kombinierbar ist. Auch sind die einzelnen Unteransprüche in einer beliebigen Kombination miteinander kombinierbar, soweit dem keine technischen Hinderungsgründe entgegenstehen.

Weitere Ausgestaltungen und Abwandlungen der Erfindung ergeben sich aus der nachfolgenden gegenständlichen Beschreibung, den Zeichnungen und den Ansprüchen.

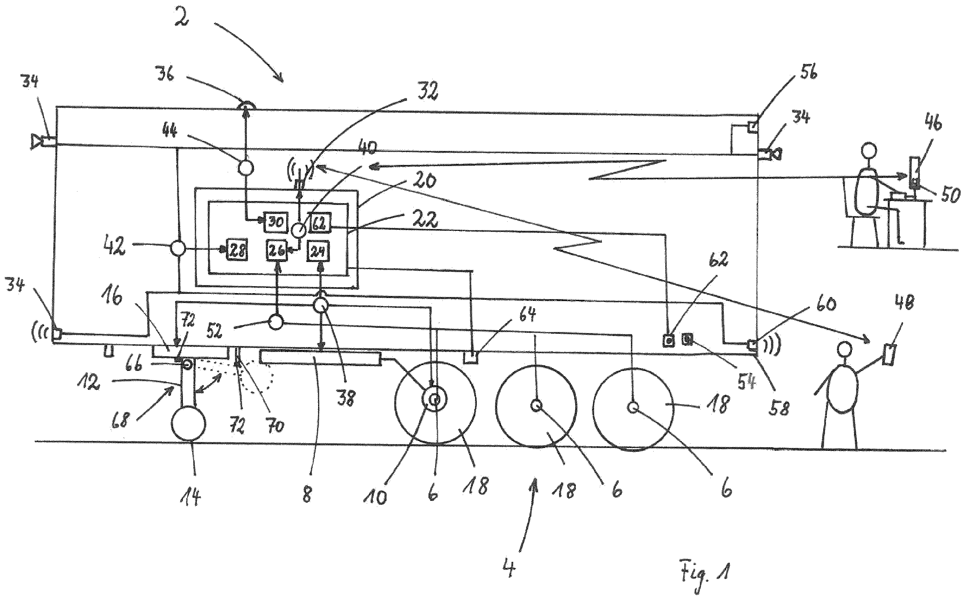

Die Erfindung soll anhand der nachfolgenden gegenständlichen Beschreibung näher erläutert werden. Die
- Fig. 1:: zeigt eine Seitenansicht auf einen mit einer elektronischen Steuerungsvorrichtung ausgestatteten Anhänger.

In Fig. 1 ist eine Seitenansicht auf einen Anhänger 2 gezeigt. Der Anhänger 2 verfügt über ein Fahrwerk 4, das im Ausführungsbeispiel drei Tragachsen 6 aufweist. An der Unterseite des Anhängers 2 ist eine Batterie 8 angeordnet. Als elektrischer Antrieb 10 ist die erste Tragachse 6 mit einem Elektromotor versehen, der das oder die zugehörigen Räder 18 dieser Tragachse 6 antreibt. Im vorderen Bereich des Anhängers 2 befindet sich ein Stützfuß 12, der im Ausführungsbeispiel klappbar ist. Am unteren Ende des Stützfußes 12 befindet sich ein Stützrad 14.

Oberhalb des Stützfußes 12 befindet sich im Ausführungsbeispiel die Lenkvorrichtung 16. Die Lenkvorrichtung 16 verfügt über einen Stellantrieb, mit dem der Stützfuß 12 um seine Längsachse drehbar ist. Mit dem Stützfuß 12 wird dann auch das Stützrad 14 gedreht, sodass sich dessen Winkelstellung im Verhältnis zum Anhänger 2 verändert. Über den Stellantrieb können auf diese Weise gewünschte Lenkwinkel eingestellt werden.

Abweichend vom Ausführungsbeispiel kann der Stützfuß 12 an seinem unteren Ende auch eine Lenkrolle aufweisen, die um 360° drehbar ist. Die Lenkrolle muss dann nicht aktiv über einen Stellantrieb gelenkt werden, sondern kann dem Lenkimpuls passiv folgen, den die Räder 18 an den Tragachsen 6 über eine Drehzahldifferenz zwischen ihnen erzeugen.

Der Anhänger 2 verfügt über eine elektronische Steuerungsvorrichtung 20. Neben der elektronischen Hardware verfügt die elektronische Steuerungsvorrichtung 20 insbesondere über ein Softwareprogramm 22. Im Softwareprogramm 22 ist eine erste Schnittstelle 24 programmiert, mit der Stellsignale 38 an den elektrischen Antrieb 10 und die Lenkvorrichtung 16 übermittelt werden können. Der elektrische Antrieb 10 und die Lenkvorrichtung 16 können über die erste Schnittstelle 24 aber auch Daten an das Softwareprogramm 22 übermitteln.

Das Softwareprogramm 22 verfügt über eine zweite Schnittstelle 26 zu einem Kommunikationssystem 32, über die Kommunikationsdaten 40 aus dem Kommunikationssystem 32 empfangen werden können. Auch ein Datenversand von Daten aus dem Softwareprogramm 22 ist über die zweite Schnittstelle 26 an das Kommunikationssystem 32 möglich. Das Kommunikationssystem 32 kann beispielsweise eine Funkantenne sein, über die die Daten als digitale Datensätze an einen Empfänger versendet werden können.

Das Softwareprogramm 22 verfügt über eine dritte Schnittstelle 28, über die Sensordaten 42, die mit einem Umfeldüberwachungssystem 34 generiert werden, empfangen werden können. Die dritte Schnittstelle 28 kann ebenfalls so ausgelegt sein, dass sie einen bidirektionalen Datenaustausch möglich macht. In der Fig. 1 sind im oberen Bereich des Anhängers 2 digitale Kameras als beispielhafte Bestandteile des Umfeldüberwachungssystems 34 angebracht, deren Linsen nach vorn und hinten ausgerichtet sind. Es können zusätzliche digitale Kameras vorhanden sein, die auch die Umgebung zur Seite des Anhängers 2 beobachten. Im unteren Bereich des Anhängers 2 sind als Bestandteile des Umfeldüberwachungssystem 34 Ultraschallsensoren angeordnet, die das Echo eines Ultraschallsignals messen und aus der Laufzeit des Signals einen Abstand zu möglichen Hindernissen errechnen. Abweichend vom Ausführungsbeispiel können auch hier mehr und zusätzlich oder alternativ andere geeignete Sensoren verwendet sein, um die Situation im Umfeld des Anhängers 2 zu erfassen und an das Softwareprogramm 22 zu melden.

Das Softwareprogramm 22 verfügt über eine entsprechende Programmierung, um die Kommunikationsdaten 40 und die Sensordaten 42 elektronisch auszuwerten und zu Stellsignalen 38 zu verarbeiten, die an die Lenkvorrichtung 16 sowie an den elektrischen Antrieb 10 gesendet werden. Bei der Verarbeitung der Kommunikationsdaten 40 und der Sensordaten 42 ist eine Priorisierung der jeweiligen Daten hilfreich, um in einer Fahrsituation die richtigen Aktionen ausführen zu können. Um die Priorisierung zu ermöglichen, können die Kommunikationsdaten 40 und die Sensordaten 42 bereits mit einer Priorisierung versehen sein, wenn sie über die Schnittstellen 26, 28 an das Softwareprogramm 22 übermittelt werden. Das Softwareprogramm 22 kann aber auch darauf programmiert sein, die Kommunikationsdaten 40 und die Sensordaten 42 mit einem eigenen Wert für die Priorisierung zu versehen und diese mit diesen Priorisierungswerten weiter zu verarbeiten.

Das Softwareprogramm 22 verfügt außerdem über eine vierte Schnittstelle 30, über die Navigationsdaten 44 mit einem Navigationssystem 36 ausgetauscht werden können. Auch hier können das Softwareprogramm 22 sowie die Schnittstelle 30 so ausgelegt sein, dass der Datenaustausch bidirektional möglich ist.

Über die zweite Schnittstelle 26 ist insbesondere eine Kommunikation des Softwareprogramms 22 mit einem externen Rechner 46 und/oder einem Mobile Device 48 möglich. Der externe Rechner 46 kann mit einem Managementsystem 50 ausgestattet sein, über das ein Bediener Befehle an das Softwareprogramm 22 übermitteln oder vom Softwareprogramm Zustandsdaten 52 über den aktuellen oder historischen Zustand von Komponenten des Anhängers 2, aktuelle Betriebsdaten der Lenkvorrichtung 16 oder des elektrischen Antriebs 10 übermittelt und angezeigt bekommen. Das Mobile Device 48 kann von einer Person vor Ort, aber auch an einem entfernten Ort beispielsweise genutzt werden, um die Fahrbewegung des Anhängers 2 zu steuern oder zu stoppen, um Befehle an die elektronische Steuerung zu Richtung 20 zu übermitteln oder um Daten des Anhängers 2 abzufragen.

An der Seitenwand des Anhängers 2 befindet sich ein Not-Aus-Schalter 54, mit dessen Betätigung eine Fahrbewegung des Anhängers 2 unmittelbar gestoppt werden kann. An dem Anhänger 2 können mehrere derartige Not-Aus-Schalter 54 angeordnet sein.

Am Heck des Anhängers 2 befinden sich Flügeltüren, deren Schließzustand mit einem Laderaum-Verschlusssensor 56 kontrolliert werden kann. Der Laderaum-Verschlusssensor 56 ist im Ausführungsbeispiel ein Sensor, der zum Umfeldüberwachungssystem 34 gehört und daran angeschlossen ist.

Am Heck des Anhängers 2 befindet sich auch die Ladebodenkante 58. Im Bereich der Ladebodenkante 58 ist zumindest einen Abstandssensor 60 angeordnet, mit dem der Abstand der Ladebodenkante 58 zu einer Ladekante einer Ladebucht gemessen werden kann. Der Abstandssensor 60 ist im Ausführungsbeispiel ebenfalls ein Bestandteil des Umfeldüberwachungssystems 34.

An der Seitenwand des Anhängers 2 befindet sich eine Schaltvorrichtung 62. Bei einer Betätigung der Schaltvorrichtung 62 wird das Softwareprogramm 22 von einem Zugbetriebsmodus auf einen automatisierten Betriebsmodus oder umgekehrt umgeschaltet. Im Ausführungsbeispiel ist die Schaltvorrichtung 62 mit einem manuellen Schalter versehen, abweichend vom Ausführungsbeispiel kann die Schaltvorrichtung 62 aber auch ferngesteuert betätigt werden, beispielsweise über das Mobile Device 48 oder über den externen Rechner 46.

Auf der Unterseite des Anhängers 2 ist ein Stellmotor 64 montiert, mit dem eine Tragachse 6, die als eine Liftachse ausgebildet ist, angehoben oder abgesenkt werden kann. Das Softwareprogramm 22 ist darauf ausgelegt, mit dem Stellmotor 64 zu kommunizieren, um die Liftachse anzuheben oder abzusenken.

Im Ausführungsbeispiel verfügt auch der Stützfuß 12 über einen Stellantrieb 66 als Bestandteil einer Verstellvorrichtung 68. Mit dem Stellantrieb 66 ist der Stützfuß 12 zwischen einer Gebrauchsstellung und einer Nichtgebrauchsstellung motorisch hin und her verlagerbar. Der Stützfuß 12 wird im Ausführungsbeispiel über eine Verriegelungsvorrichtung 70 in der gestrichelt dargestellten Nichtgebrauchsstellung gehalten. An der Verriegelungsvorrichtung 70 ist ein Sensor 72 angebracht, mit dem die korrekte Verriegelung überprüfbar ist. In der Gebrauchsstellung wird der Stützfuß 12 über den Stellantrieb 66 verriegelt. Auch hier wird die Verriegelung von einem im Stellantrieb 66 angeordneten Sensor kontrolliert. Der Sensor ist mit dem Softwareprogramm 22 verbunden, dass eine Fahrbewegung des Anhängers 2 blockiert, wenn die Sensoren melden, dass der Stützfuß 12 nicht korrekt in seiner Position verriegelt ist.

Die Erfindung ist nicht auf die vorstehend beschriebenen Ausführungsbeispiele beschränkt. Dem Fachmann bereitet es keine Schwierigkeiten, die vorstehend erläuterten Ausführungsbeispiele abzuwandeln, um die Vorrichtung an konkrete Betriebserfordernisse anzupassen.

### Bezugszeichenliste

- 2: Anhänger
- 4: Fahrwerk
- 6: Tragachse
- 8: Batterie
- 10: elektrischer Antrieb
- 12: Stützfuß
- 14: Stützrad
- 16: Lenkvorrichtung
- 18: Rad an Tragachse
- 20: elektronische Steuerungsvorrichtung
- 22: Softwareprogramm
- 24: erste Schnittstelle
- 26: zweite Schnittstelle
- 28: dritte Schnittstelle
- 30: vierte Schnittstelle
- 32: Kommunikationssystem
- 34: Umfeldüberwachungssystem
- 36: Navigationssystem
- 38: Stellsignal
- 40: Kommunikationsdaten
- 42: Sensordaten
- 44: Navigationsdaten
- 46: externer Rechner
- 48: Mobile Device
- 50: Managementsystem
- 52: Zustandsdaten
- 54: Not-Aus-Schalter
- 56: Laderaum-Verschlusssensor
- 58: Ladebodenkante
- 60: Abstandssensor
- 62: Schaltvorrichtung
- 64: Stellmotor
- 66: Stellantrieb
- 68: Verstellvorrichtung
- 70: Verriegelungsvorrichtung
- 72: Sensor

## Patentansprüche

1. Anhänger (2) mit einem zumindest eine Tragachse (6) aufweisendem Fahrwerk (4), einer am Anhänger (2) angeordneten elektrischen Batterie (8) und/oder einem stromzeugenden Aggregat mit einem elektrischen Antrieb (10) zum Antrieb zumindest eines von der Tragachse (6) getragenen Rads (18), zumindest einem wahlweise einsetzbaren Stützrad (14), und einer Lenkvorrichtung (16), mit der zumindest eines der von der Tragachse (6) getragenen Räder (18) und/oder das zumindest eine Stützrad (14) zur Ausführung einer Lenkbewegung des Anhängers (2) ansteuerbar beweglich ist, **dadurch gekennzeichnet, dass** der Anhänger (2) eine mit dem elektrischen Antrieb (10) und der Lenkvorrichtung (16) verbundene elektronische Steuerungsvorrichtung (20) aufweist, die mit einem Softwareprogramm (22) versehen ist, das darauf programmiert ist,
- über zumindest eine geeignete erste Schnittstelle (24) Stellsignale (38) an den elektrischen Antrieb (10) und die Lenkvorrichtung (16) zu übermitteln,
- über eine zweite Schnittstelle (26) zu einem Kommunikationssystem (32) Kommunikationsdaten (40) aus dem Kommunikationssystem (32) zu empfangen, und
- über eine dritte Schnittstelle (28) zu einem sensorgestützten Umfeldüberwachungssystem (34) Sensordaten (42) aus einer sensorgestützten Umfeldüberwachung zu empfangen,
und das Softwareprogramm (22) darauf programmiert ist, die an den elektrischen Antrieb (10) und/oder die Lenkvorrichtung (16) zu übermittelnden Stellsignale (38) in Abhängigkeit von Kommunikationsdaten (40) aus dem Kommunikationssystem (32) und Sensordaten (42) aus dem Umfeldüberwachungssystem (34) zu generieren.

2. Anhänger (2) nach Anspruch 1, **dadurch gekennzeichnet, dass** das Softwareprogramm (22) der elektronischen Steuerungsvorrichtung (20) darauf programmiert ist, Kommunikationsdaten (40) aus dem Kommunikationssystem (32) und Sensordaten (42) aus dem Umfeldüberwachungssystem (34) zu empfangen, die eine Prioritätskennung aufweisen, und/oder den Kommunikationsdaten (40) und den Sensordaten (42) aus dem Umfeldüberwachungssystem (34) programmgestützt eine eigene Priorität zuzuordnen, die Prioritäten der Kommunikationsdaten (40), der Sensordaten (42) und eines aktuell von der Steuerungsvorrichtung (20) ausgeführten Fahrbefehls wiederholt in ihrem Prioritätsrang miteinander zu vergleichen, und einen aktuell von der Steuerungsvorrichtung (20) ausgeführten Fahrbefehl abzubrechen oder abzuwandeln, wenn neu eingegangene oder neu priorisierte Kommunikationsdaten (40) und/oder Sensordaten (42) einen höheren Prioritätsrang aufweisen als der Prioritätsrang des aktuell von der Steuerungsvorrichtung (20) ausgeführten Fahrbefehls.

3. Anhänger (2) nach Anspruch 2, **dadurch gekennzeichnet, dass** das Softwareprogramm (22) darauf programmiert ist, über eine vierte geeignete Schnittstelle (30) Navigationsdaten (44) zu einem Navigationssystem (36) zu empfangen, und das Softwareprogramm (22) darauf programmiert ist, die an den elektrischen Antrieb (10) und/oder die Lenkvorrichtung (16) zu übermittelnden Stellsignale (38) in Abhängigkeit von Navigationsdaten (44) zum Navigationssystem (36) zu generieren.

4. Anhänger (2) nach einem der vorhergehenden Ansprüche, **dadurch gekennzeichnet, dass** das Softwareprogramm (22) darauf programmiert ist, als Navigationsdaten (44) Wegpunkte, Zielpunkte und/oder die Daten zu einer Route einer vom Anhänger (2) zurückzulegenden Strecke zu empfangen und zu Stellsignalen (38) an den elektrischen Antrieb (10) und die Lenkvorrichtung (16) zu verarbeiten.

5. Anhänger (2) nach einem der vorhergehenden Ansprüche, **dadurch gekennzeichnet, dass** das Softwareprogramm (22) darauf programmiert ist, als Kommunikationsdaten (40) Daten zu An- und Abmelderoutinen eines Managementsystems (50), Auftragsdaten, Ein- und Ausschaltbefehle für den elektrischen Antrieb (10) und/oder die Lenkvorrichtung (16) und/oder Anhängerseitige sonstige Fahrzeugkomponenten, Lade- oder Entladebefehle für die elektrische Batterie (8), Fahrbefehle, Parkbefehle und/oder Daten zur vorhandenen oder neu zu beladender Ladung zu empfangen.

6. Anhänger (2) nach einem der vorhergehenden Ansprüche, **dadurch gekennzeichnet, dass** das Softwareprogramm (22) eine Regelschleife aufweist, in der eine An- und Abmelderoutine zu einem externen Managementsystem (50) programmiert ist.

7. Anhänger (2) nach einem der vorhergehenden Ansprüche, **dadurch gekennzeichnet, dass** das Softwareprogramm (22) eine Regelschleife aufweist, in der Berechtigungen für die Erteilung von Befehlen an das Softwareprogramm (22) erteilt werden können.

8. Anhänger (2) nach einem der vorhergehenden Ansprüche, **dadurch gekennzeichnet, dass** das Softwareprogramm (22) darauf programmiert ist, als Sensordaten (42) des Umfeldüberwachungssystems (34) Daten zur Fahrwegerkennung, Personenerkennung, Hinderniserkennung, Zielerkennung und/oder Temperaturerkennung zu empfangen.

9. Anhänger (2) nach einem der vorhergehenden Ansprüche, **dadurch gekennzeichnet, dass** die elektronische Steuerungsvorrichtung (20) mit einem Softwareprogramm (22) versehen ist, das darauf programmiert ist, Daten zu An- und Abmelderoutinen eines Managementsystems (50), Auftragsdaten, aktuelle und/oder historische Zustandsdaten (52) von Fahrzeugkomponenten des Anhängers (2), Störungsmeldungen zu Betriebszuständen des Anhängers (2), Navigationsdaten (44), Bewegungsdaten, Betriebsdaten des Anhängers (2), Daten zur Ladung des Anhängers (2) und/oder Sensordaten (42) des Umfeldüberwachungssystems (34) zu generieren und diese automatisiert und/oder auf eine über die dritte Schnittstelle (28) übermittelte elektronische Abfrage über die dritte Schnittstelle (28) zu einem Kommunikationssystem (32) zu übermitteln.

10. Anhänger (2) nach Anspruch 9, **dadurch gekennzeichnet, dass** das Softwareprogramm (22) darauf programmiert ist, als aktuelle Zustandsdaten (52) Ladezustände der Batterie (8) des Anhängers (2) oder sonstiger Energiespeicher automatisiert und/oder auf eine über die dritte Schnittstelle (28) übermittelte elektronische Abfrage über die dritte Schnittstelle (28) zu einem Kommunikationssystem (32) zu übermitteln.

11. Anhänger (2) nach einem der vorhergehenden Ansprüche, **dadurch gekennzeichnet, dass** an dem Anhänger (2) zumindest ein manuell betätigbarer Not-Aus-Schalter (54) angebracht ist, der mit dem Softwareprogramm (22) der elektronischen Steuerungsvorrichtung (20) verbunden ist und bei dessen Betätigung die Steuerungsvorrichtung (20) den Anhänger (2) unmittelbar stoppt.

12. Anhänger (2) nach einem der vorhergehenden Ansprüche, **dadurch gekennzeichnet, dass** der Anhänger (2) zumindest einen Laderaum-Verschlusssensor (56) aufweist, der mit dem Softwareprogramm (22) der elektronischen Steuerungsvorrichtung (20) verbunden ist.

13. Anhänger (2) nach einem der vorhergehenden Ansprüche, **dadurch gekennzeichnet, dass** der Anhänger (2) entlang der Ladebodenkante (58) angeordnete Abstandssensoren (60) aufweist, die mit dem Softwareprogramm (22) der elektronischen Steuerungsvorrichtung (20) verbunden sind.

14. Anhänger (2) nach einem der vorhergehenden Ansprüche, **dadurch gekennzeichnet, dass** das Softwareprogramm (22) der elektronischen Steuerungsvorrichtung (20) mit einer Schaltvorrichtung (62) verbunden ist, mit der das Softwareprogramm (22) zwischen einem Zugbetriebsmodus und einem automatisierten und/oder ferngesteuerten Betriebsmodus umstellbar ist.

15. Anhänger (2) nach einem der vorhergehenden Ansprüche, **dadurch gekennzeichnet, dass** das Softwareprogramm (22) der elektronischen Steuerungsvorrichtung (20) mit dem Stellmotor (64) einer Liftachse verbunden ist und das Softwareprogramm (22) darauf programmiert ist, mit dem Stellmotor (64) die Liftachse in Abhängigkeit von vorprogrammierten Betriebszuständen anzuheben oder abzusenken.

16. Anhänger (2) nach einem der vorhergehenden Ansprüche, **dadurch gekennzeichnet, dass** die Lenkvorrichtung (16) zumindest ein Stützrad (14) aufweist, das an einem Stützfuß (12) angeordnet ist, der klappbar oder höhenverstellbar mit dem Rahmen des Anhängers (2) verbunden ist.

17. Anhänger (2) nach Anspruch 16, **dadurch gekennzeichnet, dass** der Stützfuß (12) oder die Achsaufnahme des Stützrads (14) mit einem Stellantrieb (66) um eine vertikale Achse drehbar gelagert ist und der Stellantrieb (66) mit dem Softwareprogramm (22) der elektronischen Steuerungsvorrichtung (20) verbunden ist.

18. Anhänger (2) nach Anspruch 16 oder 17, **dadurch gekennzeichnet, dass** die Lenkvorrichtung (16) zwei Stützräder (14) aufweist, die jeweils an einem eigenen Stützfuß (12) angeordnet sind, der klappbar oder höhenverstellbar mit dem Rahmen des Anhängers (2) verbunden ist, wobei die Stützfüße (12) oder die Achsaufnahmen der jeweiligen Stützräder (14) mit einem Stellantrieb (66) um eine vertikale Achse drehbar gelagert sind und der Stellantrieb (66) mit dem Softwareprogramm (22) der elektronischen Steuerungsvorrichtung (20) verbunden ist.

19. Anhänger (2) nach einem der vorhergehenden Ansprüche, **dadurch gekennzeichnet, dass** die Lenkvorrichtung (16) zumindest eine um 360° passiv oder aktiv drehbar gelagerte Lenkrolle als Stützrad (14) aufweist und die Lenkvorrichtung (16) über das Softwareprogramm (22) der elektronischen Steuerungsvorrichtung (20) darauf programmiert ist, über den elektrischen Antrieb (10) der Räder (18) zumindest einer Tragachse (6) einen Lenkimpuls zu generieren, indem zwischen den auf gegenüberliegenden Seiten einer Tragachse (6) angeordneten Rädern (18) gezielt eine Differenzdrehzahl erzeugt wird.

20. Anhänger (2) nach einem der vorhergehenden Ansprüche, **dadurch gekennzeichnet, dass** das Softwareprogramm (22) der elektronischen Steuerungsvorrichtung (20) mit einer Verstellvorrichtung (68) verbunden ist, mit der das Stützrad (14) zwischen einer Betriebsstellung und einer Ruhestellung hin und her verlagerbar ist, die Verstellvorrichtung (68) eine Verriegelungsvorrichtung (70) aufweist, mit der das Stützrad (14) in der Betriebsstellung und/oder in der Ruhestellung verriegelbar ist, die Verriegelungsvorrichtung (70) einen mit dem Softwareprogramm (22) verbundenen Sensor (72) aufweist, mit dem der Verriegelungszustand des Stützrads (14) kontrollierbar ist, und das Softwareprogramm (22) darauf programmiert ist, den automatisierten Betriebsmodus nur dann zu aktivieren, wenn der mit der Verriegelungsvorrichtung (70) verbundene Sensor (72) eine Verriegelung des Stützrads (14) meldet.

21. Anhänger (2) nach einem der vorhergehenden Ansprüche, **dadurch gekennzeichnet, dass** das Softwareprogramm (22) darauf programmiert ist, über die zweite Schnittstelle (26) ein Betriebsbereitschaftssignal zu versenden, mit dem auf einem externen Rechner (46) eine Betriebsbereitschaft des Anhängers (2) für einen automatisierten Betriebsmodus angezeigt wird, nachdem das Softwareprogramm (22) einen Funktionscheck von betriebsrelevanten Komponenten des Anhängers (2) ausgeführt hat.

22. Verfahren zum Bewegen eines Anhängers (2), der ein Fahrwerk (4) mit zumindest einer Tragachse (6), eine am Anhänger (2) angeordnete elektrische Batterie (8) oder einem stromzeugenden Aggregat, einen elektrischen Antrieb (10) zum Antrieb zumindest eines von der Tragachse (6) getragenen Rads (18), zumindest ein wahlweise einsetzbares Stützrad (14) und eine Lenkvorrichtung (16), mit der zumindest eines der von der Tragachse (6) getragenen Räder (18) und/oder das zumindest eine Stützrad (14) zur Ausführung einer Lenkbewegung des Anhängers (2) ansteuerbar beweglich ist, aufweist, wobei das Verfahren von einer Steuerungsvorrichtung (20) mit einem Softwareprogramm (22) ausgeführt wird, das mit dem elektrischen Antrieb (10) und der Lenkvorrichtung (16) verbunden ist, um den Anhänger (2) in einem automatisierten Betriebsmodus zu betreiben, wobei das Softwareprogramm (22) im automatisierten Betriebsmodus
- über zumindest eine geeignete erste Schnittstelle (24) Stellsignale (38) an den elektrischen Antrieb (10) und die Lenkvorrichtung (16) übermittelt,
- über eine zweite Schnittstelle (26) zu einem Kommunikationssystem (32) Kommunikationsdaten (40) aus dem Kommunikationssystem (32) empfängt, und
- über eine dritte Schnittstelle (28) zu einem sensorgestützten Umfeldüberwachungssystem (34) Sensordaten (42) aus einer sensorgestützten Umfeldüberwachung empfängt,
und das Softwareprogramm (22) die an den elektrischen Antrieb (10) und/oder die Lenkvorrichtung (16) zu übermittelnden Stellsignale (38) in Abhängigkeit von Daten aus dem Kommunikationssystem (32) und dem Umfeldüberwachungssystem (34) generiert.

23. Verfahren zum Bewegen eines Anhängers (2) nach Anspruch 20, **dadurch gekennzeichnet, dass** das Verfahren die in den Unteransprüchen 2 bis 19 genannten Aktionen der Steuerungsvorrichtung (20) und/oder des Softwareprogramms (22) ausführt.
